# FASCICULE DE BREVET EUROPEEN

(11) **EP 0 704 357 B1**
(45) Date de publication et mention de la délivrance du brevet: **08.12.1999**
(21) Numéro de dépôt: 95114965.7
(22) Date de dépôt: 22.09.1995
(51) Int. Cl.: B60S 1/04

(54) **Platine-support pour un mécanisme d'essuie-glace**
Trägerstruktur einer Scheibenwischeranlage
Support frame for a windscreen-wiper mechanism

(30) Priorité: 28.09.1994 FR 9411705
(43) Date de publication de la demande: 03.04.1996
(73) Titulaire: VALEO SYSTEMES D'ESSUYAGE, 78321 La Verrière (FR)
(72) Inventeur: Princet, Joel, F-86100 Chatellerault (FR)
(74) Mandataire: Gamonal, Didier

(56) Documents cités:
- GB-A- 2 151 915
- PATENT ABSTRACTS OF JAPAN vol. 13 no. 52 (M-794) ,7 Février 1989 & JP-A-63 256414 (MITSUBA) 24 Octobre 1988,

## Description

La présente invention concerne une platine-support pour un mécanisme d'essuie-glace du type comportant un élément allongé de structure tubulaire dont un tronçon d'extrémité libre est fixé à un palier de support d'un arbre d'essuie-glace.

Selon une conception connue, l'élément allongé de structure est un élément tubulaire qui est fixé à une plaque-support de la platine et dont l'extrémité libre permet d'assurer la fixation axiale et en rotation d'un palier de support pour l'arbre d'entraînement d'un essuie-glace qui est entraîné en mouvement de balayage alternatif par une tringlerie qui relie chaque arbre d'entraînement à des composants d'entraînement fixés sur la plaque-support de la platine.

Selon la conception connue décrite et représentée dans le document DE-A-2.920.899, le palier comporte un tronçon cylindrique en forme de moignon qui est reçu dans l'extrémité libre ouverte de l'élément tubulaire de structure et il comporte au moins un évidement longitudinal sensiblement parallèle à l'axe du moignon dans lequel une portion de la paroi en vis-à-vis de l'élément tubulaire de structure est enfoncée par déformation au moyen d'un poinçon de sertissage, selon une direction sensiblement perpendiculaire à l'axe du tube.

Cette technique permet d'assurer par sertissage la fixation de l'extrémité de l'élément tubulaire de structure sur le tronçon de palier en forme de moignon cylindrique reçu à l'intérieur de l'extrémité de l'élément tubulaire.

On constate toutefois que cette technique ne permet pas d'assurer de manière fiable une liaison rigide, en translation et en rotation, et l'on constate, en utilisation, l'apparition d'un jeu axial dans la liaison.

De plus cette technique ne permet pas d'assurer de manière aisée une précision suffisante du positionnement axial et angulaire du palier de support par rapport à l'élément tubulaire de structure lors de l'opération de sertissage.

Par ailleurs, cette technique nécessite de faire appel à un palier de support dont le corps est réalisé en métal et dont le poids global est donc particulièrement important.

La présente invention a pour but de proposer une nouvelle conception d'une platine-support pour un mécanisme d'essuie-glace du type comportant un élément allongé de structure tubulaire dont un tronçon d'extrémité libre est fixé à un palier de support d'un arbre d'essuie-glace, qui remédie aux inconvénients qui viennent d'être mentionnés.

Dans ce but, l'invention propose une platine-support du type mentionné précédemment, caractérisé en ce que le tronçon d'extrémité libre de l'élément de structure tubulaire est aplati et comporte un trou débouchant pour le passage de l'arbre d'essuie-glace, et en ce que le corps du palier est réalisé par moulage et est surmoulé sur le tronçon d'extrémité libre de l'élément de structure.

Selon différents aspects de réalisation de l'invention :
- le corps du palier est une pièce moulée en matière plastique ;
- le profil extérieur du tronçon d'extrémité libre n'est pas un profil de révolution autour de l'axe général de l'élément de structure;
- les bords longitudinaux du tronçon aplati d'extrémité libre de l'élément tubulaire sont relevés par rapport au plan général du tronçon aplati ;
- le plan général du tronçon aplati d'extrémité de l'élément tubulaire est parallèle à l'axe de la portion tubulaire d'extrémité de l'élément de structure;
- l'axe de la portion tubulaire d'extrémité est situé dans le plan général du tronçon aplati ;
- le corps de palier comporte un alésage qui reçoit directement à rotation l'arbre d'essuie-glace.

D'autres caractéristiques et avantages de l'invention apparaîtront à la lecture de la description détaillée qui va suivre pour la compréhension de laquelle on se reportera aux dessins annexés dans lesquels :
- La figure 1 est une vue générale en perspective qui illustre une portion d'extrémité de l'élément allongé de structure avec un palier de support surmoulé conformément aux enseignements de l'invention ;
- la figure 2 est une vue en section partielle de l'assemblage de la figure 1 selon un plan passant par les axes de l'alésage de l'arbre d'essuie-glace et de la portion d'extrémité de l'élément allongé de structure.

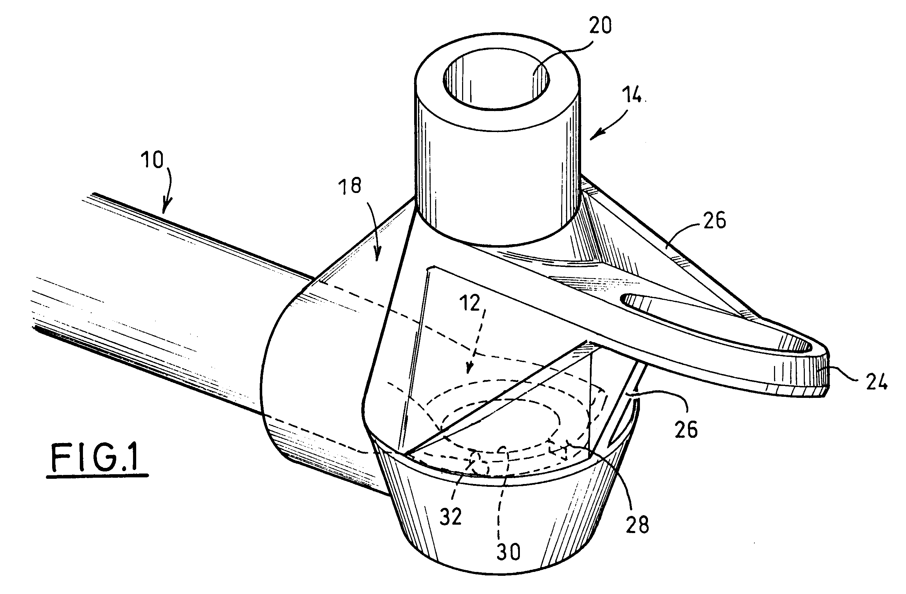

On a représenté sur la figure 1 une portion d'extrémité d'un élément allongé de structure 10 appartenant à un ensemble de platine-support (non représenté en détail) pour un mécanisme d'essuie-glace.

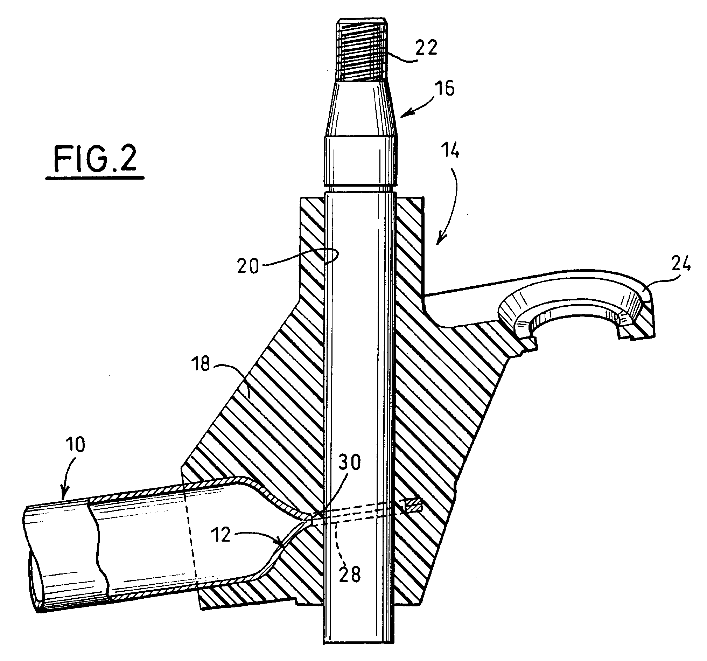

L'élément allongé de structure est, dans le mode de réalisation représenté sur les figures, un élément tubulaire cylindrique creux dont le tronçon d'extrémité libre 12 est fixé à un palier 14 de support pour un arbre 16 (voir figure 2) pour l'entraînement en balayage alternatif d'un bras d'essuie-glace (non représenté).

Comme on peut le voir sur la figure 2, le corps 18 du palier 14 est une pièce moulée en matière plastique qui comporte notamment un alésage 20 qui permet le montage à rotation, directement comme cela est représenté sur la figure 2 ou avec interposition de douilles de palier, du corps de l'arbre d'essuie-glace 16 dont l'extrémité supérieure filetée 22 fait saillie à l'extérieur de l'alésage 20 pour permettre la fixation d'un bras d'essuie-glace.

Le corps 18 comporte également un prolongement 24 pour permettre sa fixation sur un élément de structure de la caisse d'un véhicule automobile (non représenté) et des nervures 26 de renfort.

Comme on peut le voir sur les figures, le corps 18 du palier 14 est réalisé par moulage en matière plastique et il est surmoulé sur le tronçon d'extrémité libre 12 qui, à l'issue de l'opération de moulage, se trouve ainsi noyé à l'intérieur du corps 18.

Dans le mode de réalisation illustré sur les figures, le tronçon d'extrémité 12 comporte une partie d'extrémité aplatie 28 dont le plan général est parallèle à l'axe longitudinal de la portion tubulaire d'extrémité 10 et s'étend parallèlement à l'axe de cette dernière.

Grâce à la partie aplatie 28, le tronçon d'extrémité libre 12 noyé dans le corps 18 présente un profil ou contour externe qui n'est pas de révolution et qui permet d'éviter ainsi toute rotation intempestive du palier 18 par rapport à l'élément allongé de structure tubulaire.

La retenue axiale du tronçon d'extrémité libre 12 à l'intérieur du corps de palier 18 est ici assurée grâce à un perçage 30 qui est formé dans la portion aplatie d'extrémité 28 et qui est également traversé par l'alésage 20 du corps 18.

Afin d'améliorer encore la tenue en rotation de l'élément tubulaire 10 par rapport au corps 18 du palier 14 et d'accroître la rigidité de la portion aplatie 28, les bords longitudinaux 32 de cette dernière sont relevés par rapport au plan général de la portion aplatie d'extrémité 28, comme on peut le voir sur la figure 1.

On comprend aisément que la conception selon l'invention est particulièrement simple à mettre en oeuvre tout en assurant une fixation fiable du palier 14 sur l'extrémité libre de l'élément allongé de structure 10.

La réalisation par surmoulage permet notamment d'assurer, sans modifier la forme du palier 14, ni la forme de la portion d'extrémité libre de l'élément 10, l'orientation angulaire du palier 14 par rapport à la direction générale de l'élément 10, et donc par rapport à la plaque-support (non représentée) qui est fixée sur l'élément allongé de structure 10.

La conception selon l'invention permet ainsi de réaliser toute une gamme de platine-support avec un minimum de composants et avec un outillage de moulage particulièrement réduit.

L'invention n'est pas limitée à la réalisation par moulage en matière plastique du corps 14, mais le choix d'un matériau synthétique permet de réduire de manière importante le poids du palier 14.

## Revendications

1. Platine-support pour un mécanisme d'essuie-glace du type comportant un élément allongé de structure tubulaire (10) dont un tronçon d'extrémité libre (12) est fixé à un palier (14) de support d'un arbre (16) d'essuie-glace, caractérisé en ce que le tronçon d'extrémité libre (12) de l'élément de structure tubulaire (10) est aplati et comporte un trou débouchant (30) pour le passage de l'arbre d'essuie-glace (16), et en ce que le corps (18) du palier (14) est réalisé par moulage et est surmoulé sur le tronçon d'extrémité libre (12) de l'élément de structure (10).

2. Platine-support selon la revendication 1, caractérisée en ce que le corps (18) du palier (14) est une pièce moulée en matière plastique.

3. Platine-support selon l'une des revendications 1 ou 2, caractérisée en ce que le profil extérieur du tronçon d'extrémité libre (12) n'est pas un profil de révolution autour de l'axe général de l'élément allongé de structure (10).

4. Platine-support selon la revendication 1, caractérisée en ce que les bords longitudinaux (32) du tronçon aplati (12) d'extrémité libre de l'élément tubulaire (10) sont relevés par rapport au plan général du tronçon aplati.

5. Platine-support selon l'une quelconque des revendications précédentes, caractérisée en ce que le plan général du tronçon aplati d'extrémité (12) de l'élément tubulaire (10) est parallèle à l'axe de la portion tubulaire d'extrémité de l'élément de structure (10).

6. Platine-support selon la revendication 5, caractérisée en ce que l'axe de la portion tubulaire d'extrémité (10) est situé dans le plan général du tronçon aplati (12).

7. Platine-support selon l'une quelconque des revendications précédentes, caractérisée en ce que le corps de palier (18) comporte un alésage (20) qui reçoit directement à rotation l'arbre d'essuie-glace (16).

## Claims

1. A support piece for a screen wiper mechanism of the type comprising an elongate tubular structural element (10), having a free end portion (12) which is fixed to a bearing (14) for supporting a screen wiper spindle (16), characterised in that the free end portion (12) of the tubular structural element (10) is flattened and has a through hole (30) for passage of the screen wiper spindle (16) through it, and in that the body (18) of the bearing (14) is made by moulding and is moulded over the free end portion (12) of the structural element (10).

2. A support piece according to Claim 1, characterised in that the body (18) of the bearing (14) is a component which is moulded in plastics material.

3. A support piece according to Claim 1 or Claim 2, characterised in that the external profile of the free end portion (12) is not a profile of revolution about the general axis of the elongate structural element (10).

4. A support piece according to Claim 1, characterised in that the longitudinal edges (32) of the flattened free end portion (12) of the tubular element (10) are raised with respect to the general plane of the flattened portion.

5. A support piece according to any one of the preceding Claims, characterised in that the general plane of the flattened end portion (12) of the tubular element (10) is parallel to the axis of the tubular end portion of the structural element (10).

6. A support piece according to Claim 5, characterised in that the axis of the tubular end portion (10) is situated in the general plane of the flattened portion (12).

7. A support piece according to any one of the preceding Claims, characterised in that the bearing body (18) has a bore (20) which receives the screen wiper spindle (16) directly for rotation therein.

## Patentansprüche

1. Halterung für eine Scheibenwischeranlage, umfassend ein rohrförmiges langgestrecktes Strukturelement (10), von dem ein freies Endstück (12) an einem Stützlager (14) einer Scheibenwischerwelle (16) befestigt ist, **dadurch gekennzeichnet,** daß das freie Endstück (12) des rohrförmigen Strukturelements (10) abgeflacht ist und ein durchgehendes Loch (30) für den Durchgang der Scheibenwischerwelle (16) enthält und daß der Körper (18) des Lagers (14) als Formteil ausgeführt und auf dem freien Endstück (12) des Strukturelements (10) aufgeformt ist.

2. Halterung nach Anspruch 1, **dadurch gekennzeichnet,** daß der Körper (18) des Lagers (14) ein Formteil aus Kunststoff ist.

3. Halterung nach einem der Ansprüche 1 oder 2, **dadurch gekennzeichnet,** daß das äußere Profil des freien Endstücks (12) kein rotationssymmetrisches Profil um die allgemeine Achse des langgestreckten Strukturelements (10) ist.

4. Halterung nach Anspruch 1, **dadurch gekennzeichnet,** daß die Längskanten (32) des abgeflachten freien Endstücks (12) des rohrförmigen Strukturelements (10) im Verhältnis zur allgemeinen Ebene des abgeflachten Teilstücks angehoben sind.

5. Halterung nach einem der vorangehenden Ansprüche, **dadurch gekennzeichnet,** daß die allgemeine Ebene des abgeflachten Endstücks (12) des rohrförmigen Elements (10) parallel zur Achse des rohrförmigen Endabschnitts des Strukturelements (10) verläuft.

6. Halterung nach Anspruch 5, **dadurch gekennzeichnet,** daß sich die Achse des rohrförmigen Endabschnitts (10) in der allgemeinen Ebene des abgeflachten Teilstücks (12) befindet.

7. Halterung nach einem der vorangehenden Ansprüche, **dadurch gekennzeichnet,** daß der Lagerkörper (18) eine Bohrung (20) enthält, in der die Scheibenwischerwelle (16) direkt drehbar gelagert ist.
